# EUROPEAN PATENT APPLICATION

(11) **EP 3 544 141 A1**
(43) Date of publication of application: **25.09.2019**
(21) Application number: 18163073.2
(22) Date of filing: 21.03.2018
(51) Int. Cl.: H02J 3/36, H02M 7/483

(54) **ELECTRICAL ASSEMBLY**

(71) Applicant: General Electric Technology GmbH, 5400 Baden (CH)
(72) Inventor: MUKHEDKAR, Radnya Anant, Stafford, Staffordshire ST16 1WS (GB); SONNATHI, Chandra Mohan, Stafford, Staffordshire ST16 1WS (GB); GINNAREDDY, Rajaseker, Stafford, Staffordshire ST16 1WS (GB)
(74) Representative: Brevalex

(57) **Abstract**

There is provided an electrical assembly (20) for interconnecting first and second networks (40). The electrical assembly (20) comprises a power transmission medium (36,38) and a converter (22), the power transmission medium (36,38) configured for connection to the first network, the converter (22) including:
a first terminal (24,26) and a second terminal (34), the first terminal (24,26) connected to the power transmission medium (36,38), the second terminal (34) configured for connection to the second network (40);
at least one switching module (44) arranged to interconnect the first terminal (24,26) and the second terminal (34), the or each switching module (44) switchable to control a transfer of power between the first and second networks (40);
at least one discharge circuit including a discharge switching element (50) and a discharge resistor (52), the or each discharge switching element (50) switchable to switch the corresponding discharge resistor (52) into and out of the converter (22); and
a controller (58) configured to selectively control the switching of the or each discharge switching element (50) to form a current path (60) in the converter (22), the current path including the or each discharge resistor (22), so that a discharging current flows through the current path to discharge an energy stored in the power transmission medium (36,38).

## Description

This invention relates to an electrical assembly for interconnecting first and second networks, preferably for use in high voltage direct current (HVDC) transmission.

In HVDC power transmission networks alternating current (AC) power is typically converted to direct current (DC) power for transmission via overhead lines, under-sea cables and/or underground cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance.

The conversion between DC power and AC power is utilized in power transmission networks where it is necessary to interconnect the DC and AC networks. In any such power transmission network, converters are required at each interface between AC and DC power to effect the required conversion from AC to DC or from DC to AC.

According to an aspect of the invention, there is provided an electrical assembly for interconnecting first and second networks, the electrical assembly comprising a power transmission medium and a converter, the power transmission medium configured for connection to the first network, the converter including:
a first terminal and a second terminal, the first terminal connected to the power transmission medium, the second terminal configured for connection to the second network;
at least one switching module arranged to interconnect the first terminal and the second terminal, the or each switching module switchable to control a transfer of power between the first and second networks;
at least one discharge circuit including a discharge switching element and a discharge resistor, the or each discharge switching element switchable to switch the corresponding discharge resistor into and out of the converter; and
a controller configured to selectively control the switching of the or each discharge switching element to form a current path in the converter, the current path including the or each discharge resistor, so that a discharging current flows through the current path to discharge an energy stored in the power transmission medium.

The converter may include a single first terminal or a plurality of first terminals. The converter may include a single second terminal or a plurality of second terminals.

The above configuration of the electrical assembly of the invention enables fast discharge of the energy stored in the power transmission medium through the control of the or each discharge circuit internal to the converter.

In addition, the above configuration of the electrical assembly of the invention results in an electrical assembly with reduced costs and footprint in comparison to a conventional electrical assembly with a dedicated discharge circuit which is connected to the power transmission medium and external to the converter. This is because the dedicated discharge circuit is not only required to withstand voltage and insulation levels which are comparable to voltage and insulation levels of the power transmission medium but also required to have a switching apparatus capable of continuously withstanding a voltage of the power transmission medium, thus increasing the size and footprint of the conventional electrical assembly. Furthermore, the required number of dedicated discharge circuits increases with the number of power transmission media in the conventional electrical assembly, while the number of discharge circuits (i.e. one or more) in the electrical assembly of the invention is not dependent on the number of power transmission media.

In a preferred embodiment of the invention, the controller is configured to selectively control the switching of the or each discharge switching element to form the current path in response to an occurrence of an electrical fault. The electrical fault may occur in, for example, the converter or the first network. Configuring the controller in this manner enables the discharge of the energy stored in the power transmission medium so as to protect the converter and power transmission medium from adverse consequences arising from the fault.

In another preferred embodiment of the invention, the controller is configured to selectively control the switching of the or each discharge switching element to form the current path under normal operating conditions of the electrical assembly. Configuring the controller in this manner enables the discharge of the energy stored in the power transmission medium so as to, for example, carry out maintenance of the electrical assembly.

It will be understood that the electrical assembly under normal operating conditions does not experience any electrical fault. A shutdown of the electrical assembly under normal operating conditions is not carried out in response to an electrical fault, but is instead carried out in response to, for example, an operator decision, or the need to perform maintenance of the electrical assembly.

Prior to forming the current path for the discharging current, the converter may be preconfigured to allow for a more effective discharge of the energy stored in the power transmission medium. The controller may be configured to selectively control the switching of the or each switching module to block the converter prior to the control of the switching of the or each discharge switching element to form the current path. Also, when the electrical assembly includes a circuit interruption device connected to the second terminal and configured for connection to the second network, the electrical assembly may include a control unit configured to selectively operate the circuit interruption device to disconnect the converter from the second network prior to the control of the switching of the or each discharge switching element to form the current path. This enables isolation of the converter from the second network prior to the formation of the current path to carry out the discharging of the energy stored in the power transmission medium.

The energy stored in the power transmission medium may be discharged by directing the discharging current through the current path extending from the first terminal to the second terminal. For example, in further embodiments of the invention, the controller may be configured to selectively control the switching of the or each discharge switching element to connect the current path to the second terminal so that the discharging current flows to the second terminal. In such embodiments, the electrical assembly may include at least one impedance element operably connected to the second terminal. The or each impedance element may be a grounding impedance element. The or each impedance element may include a linear resistive element, a non-linear resistive element and/or a reactance element.

The or each switching module may vary in configuration so long as the or each switching module is capable of performing a switching function to control a transfer of power between the first and second networks.

In a preferred embodiment of the invention, the or each switching module may include at least one module switching element and at least one energy storage device, the or each module switching element and the or each energy storage device in the or each switching module arranged to be combinable to selectively provide a voltage source, wherein the or each discharge circuit may be arranged in the switching module or a respective one of the switching modules.

Optionally the controller may be configured to selectively control the switching of the or each discharge switching element to electrically connect the or each discharge resistor to the or each corresponding energy storage device so as to discharge an energy stored in the or each corresponding energy storage device.

The or each discharge circuit may be used to not only selectively discharge the energy stored in the power transmission medium, but also selectively discharge energy stored in the or each energy storage device of the corresponding module. The latter feature may be used to rapidly discharge the or each energy storage device in order to, for example, permit fast access to the or each switching module for repair or maintenance. Increasing the functionality of the or each discharge circuit advantageously improves the efficiency of the converter.

It will be understood that it is not essential for the or each discharge circuit to form part of a switching module.

The or each switching module in the converter may vary in configuration.

In a first exemplary configuration of a switching module, the or each module switching element and the or each energy storage device in the switching module may be arranged to be combinable to selectively provide a unidirectional voltage source. For example, the switching module may include a pair of module switching elements connected in parallel with an energy storage device in a half-bridge arrangement to define a 2-quadrant unipolar module that can provide zero or positive voltage and can conduct current in two directions.

In a second exemplary configuration of a switching module, the or each module switching element and the or each energy storage device in the switching module may be arranged to be combinable to selectively provide a bidirectional voltage source. For example, the switching module may include two pairs of module switching elements connected in parallel with an energy storage device in a full-bridge arrangement to define a 4-quadrant bipolar module that can provide negative, zero or positive voltage and can conduct current in two directions.

A plurality of switching modules may be connected in series to define a chain-link converter. The structure of the chain-link converter permits build-up of a combined voltage across the chain-link converter, which is higher than the voltage available from each of its individual switching modules, via the insertion of the energy storage devices of multiple switching modules, each providing its own voltage, into the chain-link converter. In this manner switching of the or each module switching element in each switching module causes the chain-link converter to provide a stepped variable voltage source, which permits the generation of a voltage waveform across the chain-link converter using a step-wise approximation. As such the chain-link converter is capable of providing a wide range of complex voltage waveforms.

At least one switching element may include at least one self-commutated switching device. The or each self-commutated switching device may be an insulated gate bipolar transistor, a gate turn-off thyristor, a field effect transistor, an injection-enhanced gate transistor, an integrated gate commutated thyristor or any other self-commutated switching device. The number of switching devices in each switching element may vary depending on the required voltage and current ratings of that switching element.

At least one switching element may further include a passive current check element that is connected in anti-parallel with the or each switching device. The or each passive current check element may include at least one passive current check device. The or each passive current check device may be any device that is capable of limiting current flow in only one direction, e.g. a diode. The number of passive current check devices in each passive current check element may vary depending on the required voltage and current ratings of that passive current check element.

Each energy storage device may be any device that is capable of storing and releasing energy to selectively provide a voltage, e.g. a capacitor, fuel cell or battery.

The first terminal may be a DC terminal. The second terminal may be an AC terminal.

The energy stored in the power transmission medium may be discharged by directing the discharging current through the current path extending from a first terminal to another first terminal. For example, in embodiments of the invention, the converter may include a pair of first terminals defining first and second DC terminals, the first DC terminal connected to the power transmission medium, the second DC terminal configured for connection to another power transmission medium or ground, wherein the controller may be configured to selectively control the switching of the or each discharge switching element to form the current path to connect the DC terminals so that the discharging current flows between the DC terminals.

The configuration of the converter may vary depending on the requirements of the power transfer between the first and second networks.

In embodiments of the invention, the converter may include at least one converter limb and a plurality of switching modules, the or each converter limb extending between a pair of first terminals defining first and second DC terminals, the or each converter limb including first and second limb portions separated by a second terminal defining an AC terminal, each limb portion including at least one of the switching modules, wherein the controller may be configured to selectively control the switching of the or each discharge switching element to form the current path so that the discharging current flows through at least one or both of the limb portions of the or each converter limb.

The exact configuration of the current path through the or each converter limb depends on the energy discharge requirements of the power transmission medium.

In a preferred embodiment of the invention, the converter includes three converter limbs, each of which is connectable via the respective AC terminal to a respective phase of a three-phase AC network. It will be appreciated that the converter may include a different number of converter limbs, each of which is connectable via the respective AC terminal to a respective phase of an AC network with the corresponding number of phases.

Optionally the converter may include one or more grounding connections, the or each grounding connection including a grounding switching element switchable to selectively connect the converter to ground, and the controller may be further configured to selectively control the switching of the or each grounding switching element to connect the current path to ground via the or each grounding connection. The inclusion of one or more grounding connections internal to the converter provides a reliable means of connecting the current path to ground in order to enable the fast discharge of the energy stored in the power transmission medium.

In such embodiments, the first and second terminals may respectively define AC and DC terminals, and the or each grounding connection may be arranged at an AC side or a DC side of the converter.

In embodiments of the invention employing the use of the or each impedance element and the or each grounding connection, the or each impedance element may include a non-linear resistive element, and the controller may be configured to selectively control the switching of the or each discharge switching element and the or each grounding switching element to connect the current path to the second terminal so that the discharging current flows through the or each impedance element followed by connecting the current path to ground via the or each grounding connection.

When the discharging current flows through the non-linear resistive element, the energy stored in the power transmission medium will be discharged until a voltage of the power transmission medium reaches a protective level of the non-linear resistive element. It is therefore beneficial to then connect the current path to ground via the or each grounding connection in order to discharge the remaining energy stored in the power transmission medium.

It will also be appreciated that the use of the terms "first" and "second", and the like, in this patent specification is merely intended to help distinguish between similar features (e.g. the first and second limb portions), and is not intended to indicate the relative importance of one feature over another feature, unless otherwise specified.

A preferred embodiment of the invention will now be described, by way of a non-limiting example, with reference to the accompanying drawings in which:
Figure 1 shows schematically an electrical assembly according to an embodiment of the invention;
Figure 2 illustrates a first discharge operation of the electrical assembly of Figure 1;
Figure 3 illustrates a second discharge operation of the electrical assembly of Figure 1;
Figure 4 illustrates a third discharge operation of the electrical assembly of Figure 1;
Figure 5 illustrates a fourth discharge operation of the electrical assembly of Figure 1; and
Figure 6 illustrates a fifth discharge operation of the electrical assembly of Figure 1.

The figures are not necessarily to scale, and certain features and certain views of the figures may be shown exaggerated in scale or in schematic form in the interests of clarity and conciseness.

The following embodiment of the invention is used primarily in HVDC applications, but it will be appreciated that the following embodiment of the invention is applicable mutatis mutandis to other applications operating at different voltage levels.

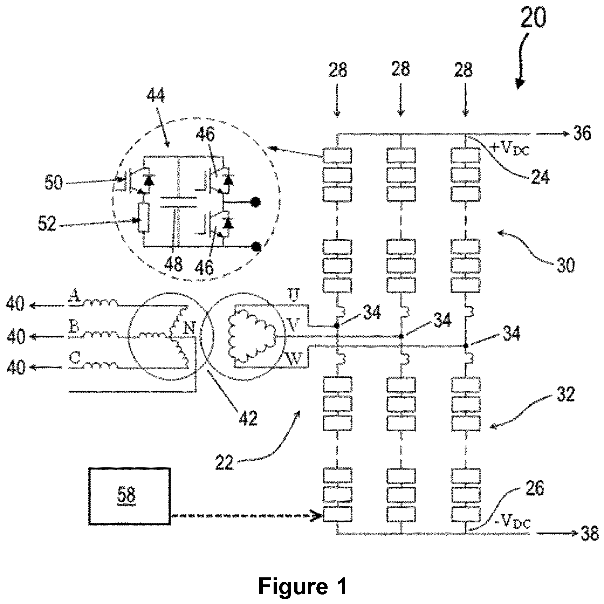

An electrical assembly according to an embodiment of the invention is shown in Figure 1 and is designated generally by the reference numeral 20.

The electrical assembly 20 includes a voltage source converter 22.

The voltage source converter 22 includes first and second DC terminals 24,26 and a plurality of converter limbs 28. Each converter limb 28 extends between the first and second DC terminals 24,26 and includes first and second limb portions 30,32 separated by a respective AC terminal 34. In each converter limb 28, the first limb portion 30 extends between the first DC terminal 24 and the AC terminal 34, while the second limb portion 32 extends between the second DC terminal 26 and the AC terminal 34.

In use, the first and second DC terminals 24,26 of the voltage source converter 22 are respectively connected to first and second DC power transmission media 36,38 connected to a DC network. In use, the AC terminal 34 of each converter limb 28 of the voltage source converter 22 is connected to a respective AC phase of a three-phase AC network 40 via a star-delta transformer arrangement 42 and a respective AC circuit interruption device (not shown) in the form of an AC circuit breaker. The electrical assembly 20 further includes a control unit (not shown) for operating the AC circuit breakers to open or close.

Each limb portion 30,32 includes a chain-link converter that is defined by a plurality of series-connected switching modules 44. Figure 1 shows schematically the structure of each switching module 44.

Each switching module 44 includes a pair of module switching elements 46 and a capacitor 48. The pair of module switching elements 46 are connected in parallel with the capacitor 48 in a half-bridge arrangement to define a 2-quadrant unipolar module that can provide zero or positive voltage and can conduct current in both directions.

Each module switching element 46 is in the form of an insulated gate bipolar transistor (IGBT) which is connected in parallel with an anti-parallel diode.

It is envisaged that, in other embodiments of the invention, each IGBT may be replaced by a gate turn-off thyristor, a field effect transistor, an injection-enhanced gate transistor, an integrated gate commutated thyristor or any other self-commutated semiconductor device. It is also envisaged that, in other embodiments of the invention, each diode may be replaced by a plurality of series-connected diodes.

The capacitor 48 of each switching module 44 is selectively bypassed or inserted into the corresponding chain-link converter by changing the states of the module switching elements 46. This selectively directs current through the capacitor 48 or causes current to bypass the capacitor 48, so that the switching module 44 provides a zero or positive voltage.

The capacitor 48 of the switching module 44 is bypassed when the module switching elements 46 in the switching module 44 are configured to form a short circuit in the switching module 44, whereby the short circuit bypasses the capacitor 48. This causes current in the corresponding chain-link converter to pass through the short circuit and bypass the capacitor 48, and so the switching module 44 provides a zero voltage, i.e. the switching module 44 is configured in a bypassed mode.

The capacitor 48 of the switching module 44 is inserted into the corresponding chain-link converter when the module switching elements 46 in the switching module 44 are configured to allow the current in the corresponding chain-link converter to flow into and out of the capacitor 48. The capacitor 48 then charges or discharges its stored energy so as to provide a positive voltage, i.e. the switching module 44 is configured in a non-bypassed mode.

In this manner the module switching elements 46 in each switching module 44 are switchable to control flow of current through the corresponding capacitor 48.

It is possible to build up a combined voltage across each chain-link converter, which is higher than the voltage available from each of its individual switching modules 44, via the insertion of the capacitors of multiple switching modules 44, each providing its own voltage, into each chain-link converter. In this manner switching of the module switching elements 46 in each switching module 44 causes each chain-link converter to provide a stepped variable voltage source, which permits the generation of a voltage waveform across each chain-link converter using a step-wise approximation. Hence, the module switching elements 46 in each limb portion 30,32 are switchable to selectively permit and inhibit flow of current through the corresponding capacitor 48 in order to control a voltage across the corresponding limb portion 30,32.

It is envisaged that, in other embodiments of the invention, each switching module 44 may be replaced by another type of switching module, which includes a plurality of module switching elements and at least one energy storage device, the plurality of module switching elements and the or each energy storage device in each such switching module being arranged to be combinable to selectively provide a voltage source.

It is also envisaged that, in other embodiments of the invention, the capacitor 48 in each switching module 44 may be replaced by another type of energy storage device which is capable of storing and releasing energy to provide a voltage, e.g. a battery or a fuel cell.

Each switching module 44 further includes a discharge circuit in the form of a series connection of a discharge switching element 50 and a discharge resistor 52. In each switching module 44, the series connection of the discharge switching element 50 and the discharge resistor 52 is connected in parallel with the capacitor 48 such that the discharge switching element 50 is switchable to switch the discharge resistor 52 into and out of the switching module 44. In use, each discharge resistor 52 may be switched into the corresponding switching module 44 to selectively discharge energy stored in the capacitor 48. This may be used to rapidly discharge the capacitor 48 in order to, for example, provide fast access to the switching module 44 for repair or maintenance.

It is envisaged that, in other embodiments of the invention, the discharge switching element and the discharge resistor may be arranged differently in the discharge circuit. It is also envisaged that, in still other embodiments of the invention, the discharge circuit may include a different number of discharge switching elements and/or a different number of discharge resistors.

The voltage source converter 22 also includes grounding connections arranged at the AC sides and DC sides of the voltage source converter 22. More specifically, a respective DC side grounding connection 54 is connected between each DC terminal 24,26 and the plurality of converter limbs 28, and each limb portion 30,32 includes an AC side grounding connection 56 connected between the switching modules 44 and the AC terminal 34. Each grounding connection 54,56 includes a grounding switching element which is switchable to selectively connect the voltage source converter 22 to ground.

The voltage source converter 22 further includes a controller 58 programmed to control the switching of the module switching elements 46, discharge switching elements 50, and grounding switching elements.

In order to transfer power between the DC and AC networks 40, the controller 58 controls the switching of the module switching elements 46 of the switching modules 44 to switch the respective limb portions 30,32 into and out of circuit between the respective DC and AC terminals 24,26,34 to interconnect the DC and AC networks 40.

When a given limb portion 30,32 is switched into circuit between the respective DC and AC terminals 24,26,34, the controller 58 switches the module switching elements 46 of the switching modules 44 of the given limb portion 30,32 to provide a stepped variable voltage source and thereby generate a voltage waveform so as to control the configuration of an AC voltage waveform at the corresponding AC terminal 34 to facilitate the transfer of power between the DC and AC networks 40.

To generate a positive AC voltage component of an AC voltage waveform at the AC terminal 34 of a given converter limb 28, the first limb portion 30 is connected into circuit between the first DC terminal 24 and the corresponding AC terminal 34, and the second limb portion 40 is switched out of circuit between the second DC terminal 26 and the corresponding AC terminal. 34

To generate a negative AC voltage component of an AC voltage waveform at the AC terminal 34 of a given converter limb 28, the first limb portion 30 is switched out of circuit between the first DC terminal 24 and the corresponding AC terminal 34, and the second limb portion 32 is connected into circuit between the second DC terminal 26 and the corresponding AC terminal 34.

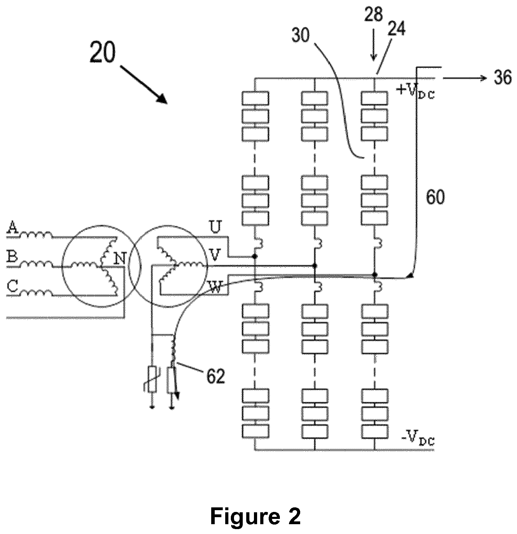

A fault may occur in the voltage source converter 22 or the DC power transmission media 36,38, which results in one of the DC power transmission media 36,38 experiencing an increase in voltage to twice the value of its normal operating voltage. For ease of reference, the DC power transmission medium 36,38 experiencing an increase in voltage to twice the value of its normal operating voltage will be referred to hereon as the faulty DC power transmission medium. Upon detection of the occurrence of the fault, a protection sequence is initiated. The protection sequence is described as follows with reference to Figures 2 to 6.

Initially the module switching elements 46 are switched to block the voltage source converter 22, and the AC circuit breakers are opened to isolate the voltage source converter 22 from the AC network 40. The discharge switching elements 50 of the switching modules 40 are then switched to form a current path 60 in the voltage source converter 22, where the current path 60 includes a plurality of discharge resistors 52 switched into the voltage source converter 22. The purpose of the current path 60 is to provide a path for a discharging current to flow from the faulty DC power transmission medium 36,38 to a lower electrical potential, so that the discharge resistors 52 can dissipate the energy stored in the faulty DC power transmission medium 36,38 and thereby enable the voltage of the DC power transmission medium 36,38 to drop to a target value, preferably to zero. The time taken for the voltage of the DC power transmission medium 36,38 to drop to the target value depends on the time constant of the current path 60.

The exact configuration of the current path 60 depends on the discharge requirements of the faulty DC power transmission medium 36,38. The following discharge operations are described with reference to the first DC power transmission medium 36 as the faulty DC power transmission medium, but it will be appreciated that the following discharge operations apply mutatis mutandis to the second DC power transmission medium 38 as the faulty DC power transmission medium.

Figure 2 illustrates a first discharge operation of the electrical assembly 20. In Figure 2, the current path 60 extends from the first DC terminal 24, through a first limb portion 30 of one of the converter limbs 28, and through a series connection 62 of a grounding reactor and a grounding resistor operably connected to the AC terminal 34 of the converter limb 28. This allows the discharging current to flow through the switched-in discharging resistors 52 so as to dissipate the energy stored in the faulty DC power transmission medium 36.

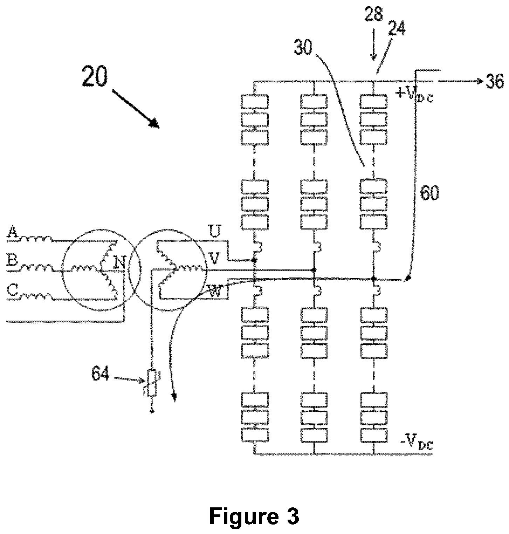

Figure 3 illustrates a second discharge operation of the electrical assembly 20. In Figure 3, the current path 60 extends from the first DC terminal 24, through a first limb portion 30 of one of the converter limbs 28, and through a grounding surge arrester 64 operably connected to the AC terminal 34 of the converter limb 28. When the discharging current flows through the grounding surge arrester 64, the energy stored in the faulty DC power transmission medium 36 will be discharged until a voltage of the faulty DC power transmission medium 36 reaches a protective level of the grounding surge arrester 64.

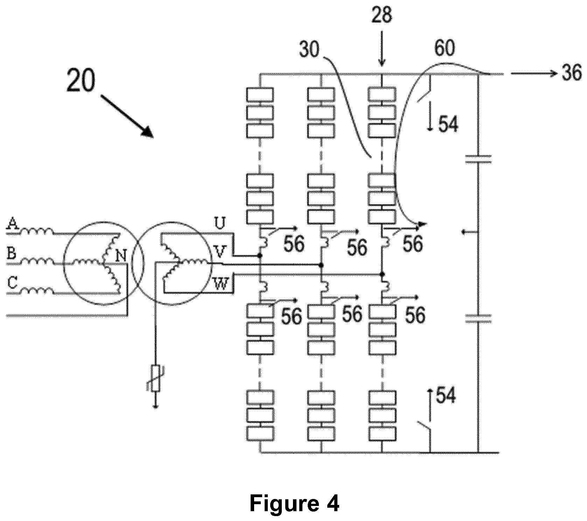

Figure 4 illustrates a third discharge operation of the electrical assembly 20. In Figure 4, a grounding switching element is switched to connect the current path 60 to ground via a first limb portion 30 of one of the converter limbs 28 and the corresponding AC side grounding connection 56. This allows the discharging current to flow through the switched-in discharging resistors 52 so as to dissipate the energy stored in the faulty DC power transmission medium 36. The third discharge operation preferably takes place after the second discharge operation so that the third discharge operation enables the remaining energy stored in the faulty DC power transmission medium 36 to drop to zero.

It will be understood that any of the grounding connections 54,56 may be utilised to connect the current path 60 to ground, which would depend on the configuration of the current path 60 within the voltage source converter 22.

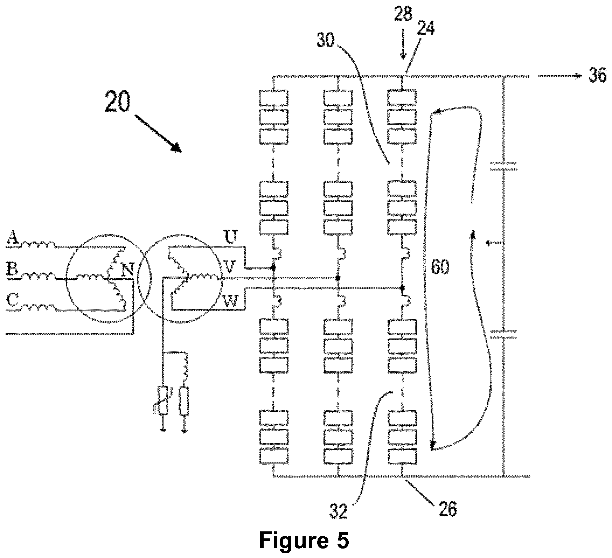

Figure 5 illustrates a fourth discharge operation of the electrical assembly 20. In Figure 5, the current path 60 extends from the first DC terminal 24, through both the first and second limb portions 30,32 of one of the converter limbs 28, and to the second DC terminal 26. This allows the discharging current to flow through the switched-in discharging resistors 52 in both the first and second limb portions 30,32 so as to dissipate the energy stored in the faulty DC power transmission medium 36. This is particularly relevant for use with a symmetrical monopole DC network.

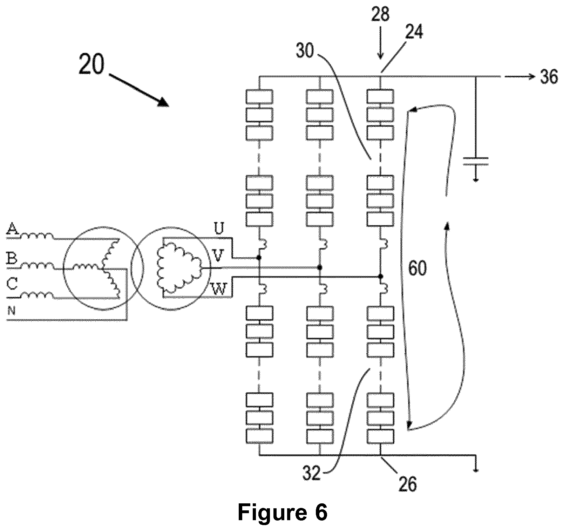

Figure 6 illustrates a fifth discharge operation of the electrical assembly 20. In Figure 6, the current path 60 extends from the first DC terminal 24, through both the first and second limb portions 30,32 of one of the converter limbs 28, and to the second DC terminal 26. This allows the discharging current to flow through the switched-in discharging resistors 52 in both the first and second limb portions 30,32 so as to dissipate the energy stored in the faulty DC power transmission medium 36. This is particularly relevant for use with an asymmetrical monopole DC network.

The configuration of the electrical assembly 20 of Figure 1 therefore enables fast discharge of the energy stored in the faulty DC power transmission medium 36 through the control of the discharge circuits internal to the voltage source converter 22. In addition, the configuration of the electrical assembly 20 of Figure 1 also provides cost and size savings in comparison to a conventional electrical assembly with dedicated discharge circuits which are connected to the DC power transmission media and external to the voltage source converter.

## Claims

1. An electrical assembly (20) for interconnecting first and second networks (40), the electrical assembly (20) comprising a power transmission medium (36,38) and a converter (22), the power transmission medium (36,38) configured for connection to the first network, the converter (22) including:
a first terminal (24,26) and a second terminal (34), the first terminal (24,26) connected to the power transmission medium (36,38), the second terminal (34) configured for connection to the second network (40);
at least one switching module (44) arranged to interconnect the first terminal (24,26) and the second terminal (34), the or each switching module (44) switchable to control a transfer of power between the first and second networks (40);
at least one discharge circuit including a discharge switching element (50) and a discharge resistor (52), the or each discharge switching element (50) switchable to switch the corresponding discharge resistor (52) into and out of the converter (22); and
a controller (58) configured to selectively control the switching of the or each discharge switching element (50) to form a current path (60) in the converter (22), the current path (60) including the or each discharge resistor (22), so that a discharging current flows through the current path (60) to discharge an energy stored in the power transmission medium (36,38).

2. An electrical assembly (20) according to Claim 1 wherein the controller (58) is configured to selectively control the switching of the or each discharge switching element (50) to form the current path (60) in response to an occurrence of an electrical fault and/or under normal operating conditions of the electrical assembly (20).

3. An electrical assembly (20) according to any one of the preceding claims wherein the controller (58) is configured to selectively control the switching of the or each switching module (44) to block the converter (22) prior to the control of the switching of the or each discharge switching element (50) to form the current path (52).

4. An electrical assembly (20) according to any one of the preceding claims including a circuit interruption device connected to the second terminal (34) and configured for connection to the second network (40), wherein the electrical assembly (20) includes a control unit configured to selectively operate the circuit interruption device to disconnect the converter (22) from the second network (40) prior to the control of the switching of the or each discharge switching element (50) to form the current path (60).

5. An electrical assembly (20) according to any one of the preceding claims wherein the controller (58) is configured to selectively control the switching of the or each discharge switching element (50) to connect the current path (60) to the second terminal (34) so that the discharging current flows to the second terminal (34).

6. An electrical assembly (20) according to Claim 5 including at least one impedance element operably connected to the second terminal (34).

7. An electrical assembly (20) according to Claim 6 wherein the or each impedance element is a grounding impedance element.

8. An electrical assembly (20) according to Claim 6 or Claim 7 wherein the or each impedance element includes a linear resistive element (62), a non-linear resistive element (64) and/or a reactance element (62).

9. An electrical assembly (20) according to any one of the preceding claims wherein the or each switching module (44) includes at least one module switching element (46) and at least one energy storage device (48), the or each module switching element (46) and the or each energy storage device (48) in the or each switching module (44) arranged to be combinable to selectively provide a voltage source, wherein the or each discharge circuit is arranged in the switching module (44) or a respective one of the switching modules (44), and optionally wherein the controller (58) is configured to selectively control the switching of the or each discharge switching element (50) to electrically connect the or each discharge resistor (52) to the or each corresponding energy storage device (48) so as to discharge an energy stored in the or each corresponding energy storage device (48).

10. An electrical assembly (20) according to any one of the preceding claims wherein the first terminal is a DC terminal (24,26).

11. An electrical assembly (20) according to Claim 10 wherein the converter (22) includes a pair of first terminals defining first and second DC terminals (24,26), the first DC terminal (24) connected to the power transmission medium (36), the second DC terminal (26) configured for connection to another power transmission medium (38) or ground, wherein the controller (58) is configured to selectively control the switching of the or each discharge switching element (50) to form the current path (60) to connect the DC terminals (24,26) so that the discharging current flows between the DC terminals (24,26).

12. An electrical assembly (20) according to Claim 10 or Claim 11 wherein the converter (22) includes at least one converter limb (28) and a plurality of switching modules (44), the or each converter limb (28) extending between a pair of first terminals defining first and second DC terminals (24,26), the or each converter limb (28) including first and second limb portions (30,32) separated by a second terminal defining an AC terminal (34), each limb portion (30,32) including at least one of the switching modules (44), wherein the controller (58) is configured to selectively control the switching of the or each discharge switching element (50) to form the current path (52) so that the discharging current flows through at least one or both of the limb portions (30,32) of the or each converter limb (28).

13. An electrical assembly (20) according to any one of the preceding claims wherein the converter (22) includes one or more grounding connections (54,56), the or each grounding connection (54,56) including a grounding switching element switchable to selectively connect the converter (22) to ground, and the controller (58) is further configured to selectively control the switching of the or each grounding switching element (54,56) to connect the current path (60) to ground via the or each grounding connection (54,56).

14. An electrical assembly (20) according to Claim 13 wherein the first and second terminals respectively define AC and DC terminals (34,24,26), and the or each grounding connection (54,56) is arranged at an AC side or a DC side of the converter (22).

15. An electrical assembly (20) according to Claim 13 or Claim 14 when dependent on Claim 8, wherein the or each impedance element includes a non-linear resistive element (64), and the controller (58) is configured to selectively control the switching of the or each discharge switching element (50) and the or each grounding switching element to connect the current path (60) to the second terminal (34) so that the discharging current flows through the or each impedance element followed by connecting the current path (60) to ground via the or each grounding connection (54,56).
